# EUROPEAN PATENT APPLICATION

(11) **EP 2 378 198 A1**
(43) Date of publication of application: **19.10.2011**
(21) Application number: 10152875.0
(22) Date of filing: 08.02.2010
(51) Int. Cl.: F23J 15/00

(54) **Post-combustion processing in power plants**

(30) Priority: 13.02.2009 US 371208
(71) Applicant: General Electric Company, Schenectady, NY 12345 (US)
(72) Inventor: Maddaus, Alan Donn, Rexford, NY 12148 (US); Wotzak, Gregory Paul, Schenectady, NY 12345 (US); Adelman, James Nicolas, Carmel, NY 101512 (US)
(74) Representative: Gray, Thomas

(57) **Abstract**

A system and method for configuring a steam turbine (16) in a power plant (10) to supply steam from a low pressure section (14) of the steam turbine (16) to a flue-gas processing unit (18, 19) in the power plant (10).

## Description

### BACKGROUND OF THE INVENTION

The present invention relates generally to power plants. More particularly, the invention is directed to sourcing a supply of steam for use in flue-gas treatment.

Power plants may combust various fuels, such as coal, hydrocarbons, biomass, waste products, and the like, in boilers, for example, to generate steam and electricity. Exhaust streams (i.e., flue gas) of such combustion processes may be treated to neutralize or remove various compounds, such as sulfur oxides, nitrogen oxides, and particulate matter, prior to discharge of the flue gas to the environment. These downstream processes may include post-combustion carbon capture systems. For example, a compound that may be separated from the flue gas is carbon dioxide (CO2).

### BRIEF DESCRIPTION OF THE INVENTION

An aspect of the present invention is a power plant having: a boiler to combust fuel, vaporize liquid water into steam, and discharge a combustion exhaust; a treatment unit to process combustion exhaust discharged from the boiler; a steam turbine to receive steam from the boiler and having a shaft, an intermediate pressure section, and a low pressure section, wherein the steam turbine is configured to provide steam from the low pressure section to the separation unit; and a load coupled to the shaft of the steam turbine and configured to be driven by the steam turbine to generate electricity.

An aspect of the present invention is a method of operating a power plant, including: feeding liquid water and fuel to a boiler; combusting the fuel in the boiler to generate steam; discharging a combustion exhaust from the boiler; supplying steam from the reboiler to a steam turbine; processing the combustion exhaust in a treatment unit; and supplying steam from a low pressure section of the steam turbine to the separation unit.

An aspect of the present invention is a method including configuring a steam turbine in a power plant to supply steam from a low pressure section of the steam turbine to a flue-gas processing unit in the power plant, wherein configuring the steam turbine involves installing a steam turbine at the power plant or retrofitting an existing steam turbine disposed at the power plant.

An aspect of the present invention includes a steam turbine having at least a shaft, an intermediate pressure section, and a low pressure section with a steam extraction to provide steam to a flue-gas processing unit.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:

FIG. 1 is a schematic flow diagram of an exemplary power plant in accordance the present techniques;

FIG. 2 is a schematic flow diagram of an exemplary CO2 separation unit in accordance the present techniques;

FIG. 3 is a simplified cross-section of an exemplary low pressure section of a steam turbine in accordance with the present techniques;

FIG. 4 is a diagrammatical representation of exemplary configurations for a low pressure section of a steam turbine in accordance the present techniques;

FIG. 5 is a cross-section of an exemplary low pressure section of a steam turbine in accordance the present techniques; and

FIG. 6 is a flow diagram of an exemplary method in accordance with the present techniques.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Any examples of operating parameters are not exclusive of other parameters of the disclosed embodiments.

Combustion product gases (e.g., flue gases) in power plants and other facilities may be exhausted to the outside air. Flue gases are produced when coal, oil, natural gas, wood, or other fuel is combusted in an industrial furnace, a power plant's steam-generating boiler, or other combustion device. Flue gas may be composed of carbon dioxide (CO₂) and water vapor, as well as nitrogen and oxygen remaining from the intake combustion air. It may also contain a relatively small percentage of pollutants, such as particulate matter, carbon monoxide, nitrogen oxides, sulfur oxides, and the like.

The present technique may provide for an efficient source of steam for the processing and treatment of post-combustion streams (i.e., flue gas) in power plants and other facilities. Steam may be employed in the processing of flue gas in a variety of ways, such as in the regeneration of solvent for the absorption of CO2 from power-plant flue gas in CO2 removal systems. One source of steam is intermediate pressure exhaust of a steam turbine in the power plant. Another source, in accordance with aspects of the present technique, is to supply steam from a low-pressure section of the steam turbine.

The steam turbine system in a power plant may be configured or modified to supply steam. Such steam may be provided, for example, to where the flue gas or combustion exhaust gas is treated, such as where carbon dioxide is extracted from the flue gas of the plant. In general, the present technique may provide a solution to the source of steam energy for post-combustion carbon capture systems and other post-combustion systems. The technique may provide increased efficiency and decreased power loss for the power plant and the post-combustion system. In addition, the technique may beneficially provide for new designs of steam turbines and retrofits of steam turbines.

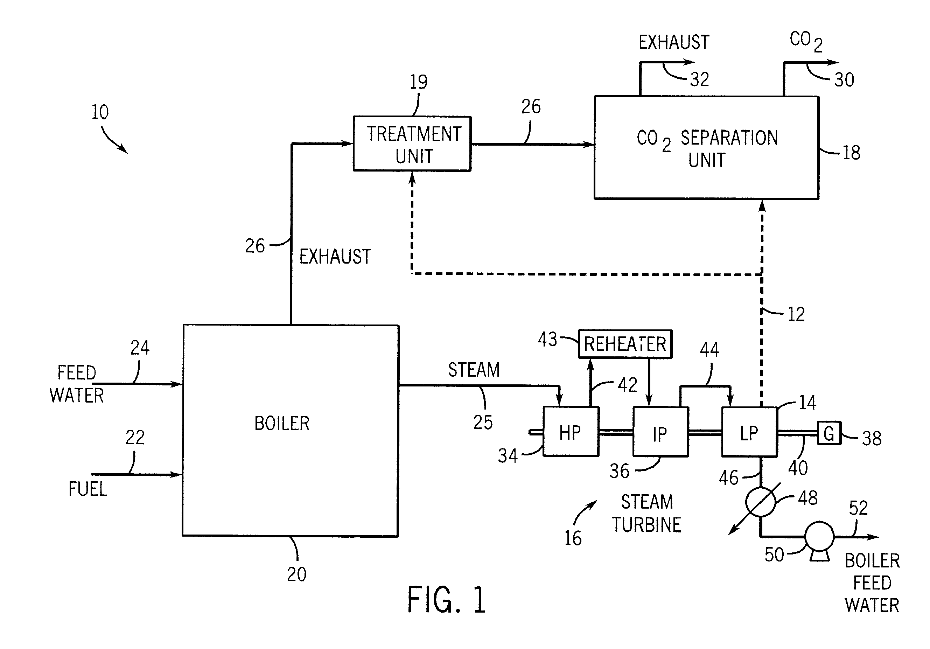

Referring to FIG. 1, a power plant 10 is depicted. The power plant 10 may be an independent power plant, or a power plant at utility or industrial site, for example. A steam line 12 is routed from the low pressure section 14 of a steam turbine 16 to provide steam 12 to a CO2 separation unit 18 (e.g., to a stripper reboiler in unit 18) and/or to other flue-gas treatment units 19. The power plant 10 includes a boiler 20 supplied with fuel 22 and boiler feed water 24. The fuel 22 may include coal, biofuel, heavy oil, waste products, and other combustible fuels. The boiler feed water 24 may be treated water, such as demineralized water, and may include condensed steam returned from the steam turbine 16. Lastly, it should be noted that the term "boiler" employed in the present discussion may refer to typical boilers, as well as to combustion and and/or steam generating vessels or equipment, in general.

In the boiler 20, the fuel 22 is combusted, such as in a furnace of the boiler 20. Heat from the combustion vaporizes or boils the boiler feed water 24 in the boiler 20, and steam 25 is generated and supplied to the steam turbine 16. Combustion exhaust 26 (i.e., flue gas) exits from the boiler 20. As indicated, the combustion exhaust 26 may include nitrogen, oxygen, CO2, nitrogen oxides, sulfur oxides (e.g., sulfur dioxide or SO2), and particulate matter. The nitrogen oxides may be derived from the nitrogen in the ambient air used in the combustion and from any nitrogen-containing compounds in the fuel 22. The sulfur oxides are generally derived from sulfur-containing compounds in the fuel 22. The particulate matter may be composed of small particles of solid materials and small liquid droplets.

The combustion exhaust 26 may be processed in a variety of exemplary treatment processes, which are represented by treatment unit 19. In treatment units 19, certain compounds of the combustion exhaust 26, such as the sulfur oxides, nitrogen oxides, and so forth, may be altered or removed in scrubbers, bag filters, electrostatic precipitators, activated carbon, catalytic reduction systems, calcium-based reagent treaters, and so on. In one example, sulfur trioxide (SO3) is converted to sulfur dioxide (S02). In another example, S02 is removed form the exhaust 26. Flue gas treatment has become a focus of electric utilities and industrial operations due to air quality standards. As companies seek to comply with air quality regulations and to use more economical fuel sources, the need for effective flue gas treatment options has increased. However, it should be emphasized that the present technique is not limited to satisfying any particular standard or regulation.

In the depicted embodiment of FIG. 1, steam 12 may be supplied to one or more treatment units 19. The CO2 separation unit 18 is separately depicted and, as mentioned, receives steam 12 from the steam turbine 26 in the illustrated embodiment. However, again, it should be emphasized that steam 12 from steam turbine 16 may be supplied to other treatment units 19 and other users of steam within the power plant. Such supply of steam 12 may improve the efficiency of the power plant 10.

In the exemplary CO2 separation unit 18, the CO2 is separated from the exhaust 26, as indicated by reference numeral 30. The CO2 may be further processed, such as being compressed and sequestered. Further, an exhaust 32 may exit the CO2 separation unit and be discharged to the environment. On the other hand, the exhaust 32 may be further processed prior to discharge to the environment or elsewhere.

The steam 25 provided by the boiler 20 is fed to the steam turbine 16 at the high pressure section 34. In a general case, the steam turbine 16 also includes an intermediate pressure section 36, the low pressure section 14, and a shaft 38. A load 40, such as a generator, is driven by a shaft 38 to produce electricity. In operation, the steam 25 may be fed initially to the high pressure section 34. Steam is generally also fed from the high pressure (HP) section 34 to the intermediate pressure (IP) section 36, as indicated by reference numeral 42. The steam from the HP section 34 may be sent through a reheater 43 prior to entry to the IP section 36. It should be noted that alternate configurations (not depicted) of steam turbine 16 may not include a high pressure section 34, for example, if the available pressure of the inlet steam 25 is low. In this alternate case, the steam 25 from the boiler may be fed to the IP section 36, and the reheater 43 not employed.

In the illustrated embodiment, steam is further fed to the low pressure (LP) section 14 from the IP section 36, as indicated by reference numeral 44. It should be emphasized that the present technique is not limited to steam turbines having a particular number of sections or configuration. For example, the present technique may apply to steam turbines having only two sections (e.g., an IP section and a LP section). Further, the steam turbine may have multiple sections in parallel at the same pressure.

Steam 46 exiting the LP section 14 is fed to a condenser 48 where the steam is condensed. The condensed steam may be pumped via pump 50 as recovered boiler feed water 52 to the boiler 20. The boiler feed water system (not depicted) may include a variety of heat exchangers and other equipment to process and heat the water 52 prior to its entry to the boiler 20 as boiler feed water 24. In addition, as appreciated by the skilled artisan, the steam turbine 16 may be equipped with appropriate instruments and alarms to monitor operating conditions including speed, vibration, shell and rotor expansions, steam and metal temperatures, rotor straightness, turning gear operation, and various steam, oil, and hydraulic system pressures. Tools, lifting bars, and related items may be employed for erection and maintenance of the steam turbine 16. Moreover, in general, there are a variety of emission control technologies for steam systems. Such technologies may include flue-gas recirculation, low excess firing, combustion control, using low nitrogen fuel oil, inserting water/steam to lower NOx, selective non-catalytic reduction, selective catalytic reduction, and others.

In sum, the present technique provides extraction of steam from a number of points in the LP section 14 of the steam turbine 16 in order to provide steam 12 to flue-gas treatment units (e.g., units 18 and 19). In certain embodiments, steam 12 is fed to the CO2 separation unit 18, such as to a stripper reboiler in the unit 18. In one such example, the steam 12 may be beneficially supplied at temperatures and pressures effective for operation of the stripper reboiler. In other words, the operating pressures and temperatures of the LP section steam may be relatively close or in sync with the demands of the CO2 stripper reboiler. This is in contrast to alternate approaches of sourcing the steam (e.g., used for the stripper unit) via a slipstream of steam from the exhaust of the IP pressure section 36 of a steam turbine 16. Unfortunately, in configuring or retrofitting a steam turbine 16 to supply such IP steam, the IP steam may exceed the pressure and temperature effective for operation of the steam boiler. Thus, while retrofits cost may be relatively low with use of IP steam, the operation may be inefficient

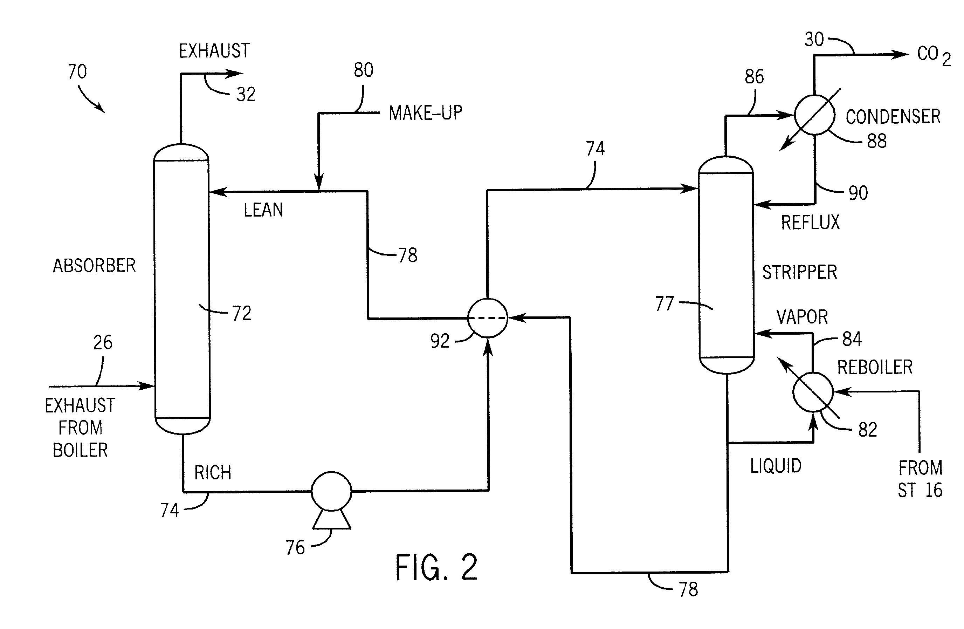

FIG. 2 depicts an exemplary CO2 separation system 18 that may utilize steam 12 from the LP section 14 of the steam turbine 16. It should be stressed that system 18 is only given as an example, and that employment other CO2 separation units or flue-gas treatment units, generally, may be afforded benefits from the present technique. As appreciated by the skilled artisan, various licensable technologies and other technologies exist for CO2 separation systems. Moreover, the system 18 may vary in size, depending on the amount of incoming CO2, which may depend, for example, on the size of the boiler 20 and number of boilers 20, the types of fuels 22 fed to the boilers 20, and so on. The size of the CO2 system 18 may be relatively small (e.g., a skid-mounted unit) or may be larger, ranging up to a size of 5000 metric tons CO2 or greater per day recovered.

Interest in recovery of CO2 from flue gases may be propelled by multiple factors including the merchant CO2 market, renewed interest in enhanced oil recovery (EOR), and the desire to reduce greenhouse gas emissions. Carbon dioxide may be used in the food industry in carbonated beverages, brewing, and flash drying. Its industrial uses include enhanced oil recovery (EOR), welding, chemical feedstock, inert gas, firefighting, and solvent extraction as a supercritical fluid. It is an ingredient in medical oxygen, where in low concentrations CO2 acts as a breathing stimulant. Flue gases have long been a source of CO2 for the merchant CO2 market, and typically more so in remote locations where by-product CO2 sources are unavailable, for example. In the simplest case, fuel is combusted to produce flue gas. CO2 is then extracted from the flue gas using a solvent, and heat from the upstream combustion process to support the heat required for the CO2 capture.

In the illustrated embodiment of FIG. 2, the exhaust 26 from the boiler 20 may be fed to an absorber 72 in the CO2 separation system 18. The exhaust 26 may be fed to the absorber 72 at the discharge pressure (e.g., at or near atmospheric pressure, less than 30 psia, etc.) from the boiler (minus any hydraulic losses in the piping or in the treatment units 19). On the other hand, the exhaust 26 may be pressurized prior to entering the stripper 72, either for the CO2 removal or pressurized in an upstream treatment unit 19, and the like. The carbon dioxide content of incoming exhaust 26 (flue-gas) is generally up to 30 volume %, depending, for example, on the fuel 22 employed in the boiler 20. The exhaust 26 may have been cooled, pretreated for removal of particulates and impurities such as SOx and NOx, and so on.

In the CO2 separation system 18, solvent 74 rich in CO2 may exit the bottom of the absorber 72 and be delivered via pump 76 to a stripper 77. Solvent 78 lean in CO2 exits a bottom portion of the stripper 77 and is fed back to an upper portion of the absorber 72. The absorber 72 and stripper 77 may incorporate a variety of internal components, such as trays, packing, supports, and so on. The absorber 72 is configured to absorb CO2 (e.g., via countercurrent flow) from the entering exhaust 26. The stripper 77 is configured to remove the CO2 from the solvent. Make-up solvent 80 may be fed to the absorber 72. The sizes of the absorber 72 and stripper 77 may generally be a function of the amount of CO2 to be removed, and may be sized (e.g., height, diameter, etc.) according to various engineering design equations. Moreover, it should be noted that a single stripper 77 may server multiple absorbers 72, for example.

The solvent may be a solution or dispersion, typically in water, of one or more absorbent compounds, that is, compounds which in water create an absorbent fluid that compared to water alone increases the ability of the fluid to preferentially remove carbon dioxide from the exhaust 26. Examples of such compounds are well known in this art and can readily be ascertained by the practitioner. Examples for the solvent include organic amines, alkanolamines, diethyanolamine (DEA), monethanolamine (MEA) and other primary amines, hindered amines, piperazine, pyrrolidine, methyldiethanolamine (MDEA), diethyanolamine (DEA), disoprpanolamine (DIPA), triethyanolamine (TEA), potassium carbonate, sodium hydroxide, ammonia, various weak acid-alkali salts, etc. Inhibitors may be included in the solvent to inhibit degradation of the solvent.

The absorber 72 can be of any construction typical for providing gas-liquid contact and absorption. In certain examples, the absorber 72 may operate at slightly above ambient pressure. The temperature in the absorber 72 can vary, depending on the technology and solvent employed. In one example with an absorber 72 employing an alkanolamine solvent, the temperature in the absorber 72 ranges form 40 °C to 45 °C at the top of the absorber 72 to 50 °C to 60 °C at the bottom of the absorber 72. Optionally, a mist eliminator at the top of the absorber 72 traps entrained solvent in the absorber vent gas (exhaust 32), which may be essentially enriched nitrogen. The CO2 from the exhaust 26 is preferentially absorbed by the solvent (i.e., the percentage of the carbon dioxide in the incoming exhaust 26 that is absorbed is greater than the percentage of other gases present in the exhaust 26), producing a CO2-enriched liquid solvent stream 74 which, as mentioned, emerges from the bottom of the absorber 72 and is fed to the rich solvent pump 76.

Pump 76 compresses the carbon dioxide enriched liquid absorbent stream74 to a pressure which is sufficient to enable the stream 74 to reach the top of stripper 77 at the desired pressure (e.g., up to 15 psia, 5 psia to 30 psia, 35 psia or greater, and so on). The CO2-rich stream 74 may be preheated in the countercurrent heat exchanger 79 by the hot regenerated or lean solvent 78 (e.g., heated to a temperature of 100 to 110 ° C) and is subsequently fed to the top portion of the stripper 77. Alternatively, this stream can be heated before it is compressed in pump 76. The stripper 77 may be a pressurized unit in which carbon dioxide is recovered from the carbon dioxide enriched liquid solvent stream 74. As indicated, the pressures in the stripper 77 (and in the reboiler 82) may be maintained (e.g., at 35 psia or more). In one example, the solvent employed includes monoethanolamine, and the pressure in the stripper 77 and reboiler 82 is maintained in the range of 40 to 55 psia.

The stripper 77 generally incorporates a reboiler 82 which receives a portion of lean liquid solvent 78 exiting the bottom portion of the stripper 77. The reboiler 82 vaporizes the liquid solvent and provides solvent vapor 84 back to the stripper 77. A single stripper may include more than one reboiler 82. In the illustrated embodiment, the reboiler 82 receives steam from the low pressure section 14 of stream turbine 16 (see FIG. 1). In one example, vapor (and gas) 86 exiting the top of the stripper 77 is fed through an overhead condenser 88. A portion of the stream 86 is condensed and fed back as reflux 90 to the stripper 77. The reflux 90 may be routed through an accumulator vessel, a pump, and so forth, prior to entry into the stripper 77. Separated CO2 30 is removed from the condenser 88 for recovery. Again, the CO2 stream 30 may be compressed, for example, to facilitate recovery and storage. Lastly, as mentioned, a heat exchanger 79 may provide for cross-exchange of the rich solvent 74 and the lean solvent 78. Such cross-exchange may provide improved efficiency via providing heat from lean solvent 78 to the rich solvent 74.

In general, it should be noted that gas-liquid absorption systems may be used in the removal of carbon dioxide from power-plant flue gases. Gas-liquid contactors, such as an absorber 72, are used to selectively absorb carbon dioxide from combustion or flue gases produced by utility and industrial plants. The flue gas is usually counter-currently contacted with an absorption fluid (e.g., solvent), such that carbon dioxide is selectively absorbed in the absorption fluid. This carbon-dioxide rich solvent is heated and directed to a stripper unit, such as stripper 77, which operates at an elevated temperature in order to remove carbon dioxide from the solvent. Energy is provided to the stripper to elevate the temperature in the stripper 77 to facilitate transport of the carbon dioxide to the gaseous phase for transfer to sequestration processes. It should be emphasized that other unit operations and systems other than gas-liquid absorption systems may be employed separate CO2 from flue gas. Such alternate systems may also benefit from lower pressure steam (e.g., 30-70 psig at about 230-250 °F or higher) found as LP steam and not need higher pressure steam, such as with IP steam.

As mentioned, a source for the steam used by the stripper 77 can be a slipstream of steam from the exhaust of the IP section (e.g., section 36 in FIG. 1) of the power-plant steam turbine 16. Beneficially, supply of steam from the IP section 36 (e.g., from stream 44) may be a relatively straightforward retrofit. However, as indicated, sourcing steam from the IP section 36 of a steam turbine may result in a significant loss of efficiency (e.g., greater than 1 %) and power (e.g., greater than 10 MW) for the total power plant because the pressure and temperature of the IP steam 44 may exceed the requirement of the flue-gas treatment process. Thus, again, the present technique advantageously provides for extraction of steam from one or more points in the LP section 14 of the steam turbine 16 in order to provide steam to a stripper reboiler 82 at temperatures and pressures which are closer to those effective for the stripper reboiler 82. The amount of steam extracted (e.g., in pounds per hour) may be at least an amount required for operation of an exemplary stripper reboiler 82 (which may include taking into account the pressure and temperature of the steam, the operating pressure and temperature of the stripper, the lean-rich cross-exchanger approach temperature, the stripper reflux rate, and so forth). In one example for a carbon separation system employing an inhibited MEA as the solvent, the amount of steam utilized by the reboiler 82 is in the range of 3,000,000 to 4,000,000 Btu's per ton of CO2 recovered. The affected stages of the LP section 14 of the steam turbine 16 may be designed to enable efficient extraction of this steam 12. Such design may address balancing and sizing of the stages in the LP section 14. Further, the extractions may be designed to additionally supply LP turbine extraction steam for other uses than flue-gas treatment, such as for heating boiler feed water, and so forth.

The LP sections 14 of exemplary steam turbines 16 have a number of stages, generally ranging from about 5 stages to about 40 stages. Moreover, as indicated, steam turbines 16 may have one or more LP sections 14 in series and/or parallel. Extraction of steam 12 from the LP section 14 may be from one or more places or stages of the LP section 14, such as in up to four stages or more. The casing of the LP pressure section(s) 14 may be modified or tapped into to extract or bleed the steam 12. Pipe, valves, and various pipe fittings may be used to extract or bleed the steam 12 from the casing of various stages of the LP section 14. Such piping and fittings may be sized and design based on the hydraulic requirements, for example, to supply steam 12 to unit 18 and/or treatment units 19. In the design, construction, and/or retrofit of the LP section 14, stages subsequent to steam 12 extraction or bleed points, may be smaller due to the subsequent lower flow of steam through the LP section. Beneficially, smaller subsequent stages in the LP section may reduce the cost to manufacture the LP section because less material (i.e., metal) is utilized.

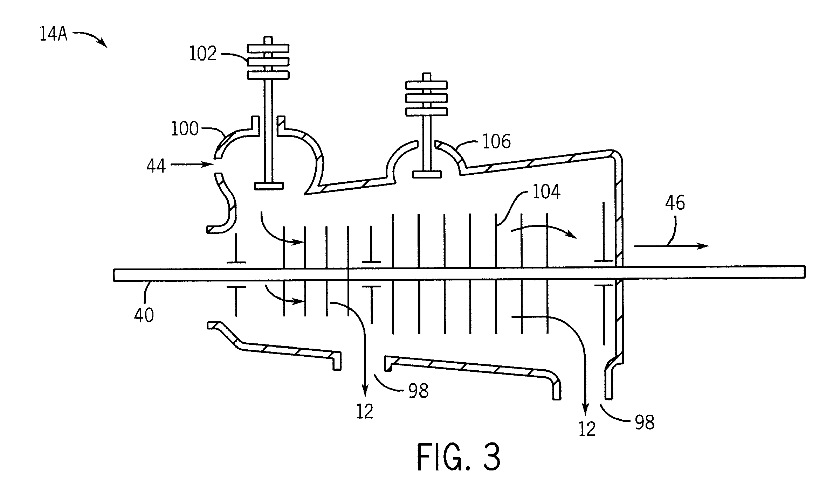

FIG. 3 is a simplified cross-section of an exemplary LP section 14A of a steam turbine 16. The LP section 14 has two steam extractions 98 for supplying LP steam 12 to a flue-gas treatment unit. While two extractions 98 are depicted, the LP section 14A may instead be configured with only one steam extraction 98 or more than two steam extractions 98. The LP section 14A has an inlet 100 for the introduction of IP steam 44 from the IP section 36 of the steam turbine 16. An inlet control valve 102 manipulates the introduction of the IP steam 44. The steam extractions 98 may be configured to remove steam just downstream of a stage 104 (depicted as vertical lines). The LP section 14A may also have one or more extraction control valves 106 to control the amount and/or pressure of steam extracted at one or more of the steam extractions 98. The amount of steam extracted from the LP section 14A may also be controlled by control valves disposed on piping (not depicted) downstream of the steam extractions 98. Lastly steam 46 may discharge from the LP section 14A via an exhaust (not depicted) to be condensed for re-use as boiler feed water.

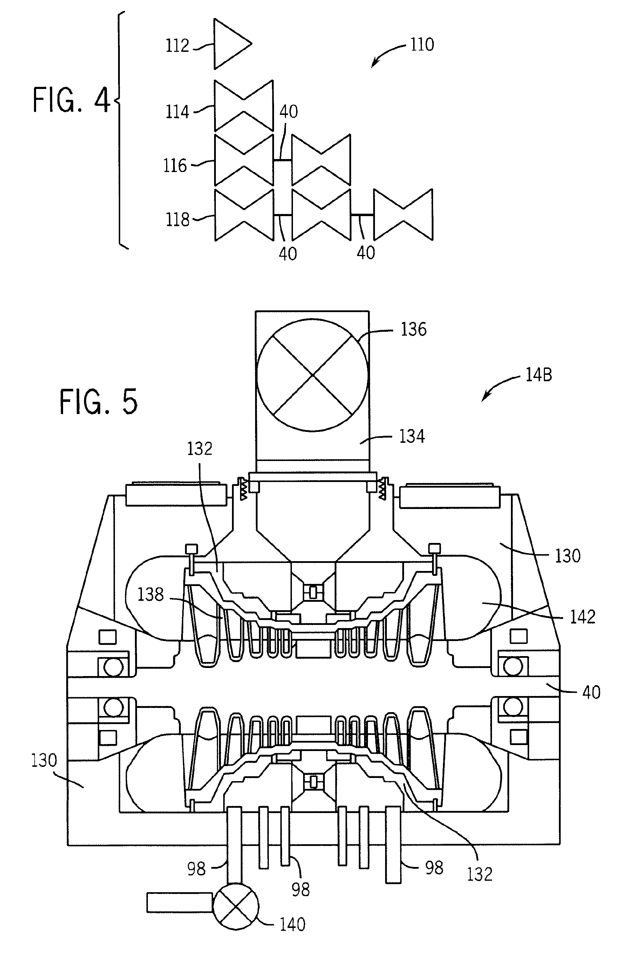

FIG. 4 depicts exemplary alternative configurations 110 of a LP section 14 of steam turbine 16. The configurations 110 are illustrated in the form of a simple flow schematic. The first configuration 112 is single flow and the second configuration 114 is double flow (two elements). In the double flow, a typical flow scheme is for the steam to enter at the center of the section and to flow outward. The last two configurations 116 and 118 depicted are four flow (four element) and six flow (six element), respectively. It is common for double flow and multiple double flow configurations 114, 116, and 118 to be constructed from double flow elements, while the single flow configuration 112 may utilize one half of a horizontally symmetric double flow element, for example. It should e noted that a three or five flow LP sections, and the like, may be constructed from appropriate combinations for single and double flow elements, and so on. Lastly, the elements with the configurations may be interconnected at least via a shaft 40.

FIG. 5 depicts diagrammatical representations of valves and extractions on a cross-section of an example LP section 14B of the steam turbine 16. In this example, the LP section 14B is a double flow element. In the illustrated embodiment, the LP section 14B has three steam extractions 98 for supplying LP steam to a flue-gas treatment unit and three additional steam extractions 98 for other uses, such as for use in heating boiler feed water. It should be clarified that depicted LP section 14B as well as with the present techniques, in general, that the LP section 14 has certain steam extractions 98 as a utility for flue-gas treatment, which are not specified for other uses, such as in the treatment of boiler feed water. The total amount of steam extracted from the LP section 14B via extractions 98 may be in the range of 10 % to 25 %, by weight, of the steam entering and flowing through the LP section 14B, for example.

In this example, the extractions 98 are symmetrically arranged. However, symmetry of the extractions is not generally required, but may pose advantages in design of the LP turbine. Additional extractions 98 or fewer number of extractions 98 may exist, depending on the requirements of the cycle including the flue gas treatment system, for example. In a multiple LP element arrangement such as with the configurations 116 and 118 of FIG. 4, a differing number and arrangement of extractions 98 for each element may be implemented.

In FIG. 5, the LP section 14B has an outer casing 130 (or exhaust hood) and inner casing 132. The LP section 14B is situated around a shaft 40. has an inlet 134 for introduction of IP turbine steam 44 from the IP section 36 of the steam turbine 16. An inlet control valve 136 may be included to admit the desired amount of steam to the LP section 14B, with a balance of steam from the IP turbine section 36 going to the flue-gas treatment unit, for example. The steam extractions 98 may be configured to remove steam just downstream of a stage 138. The LP section 14B may have one or more extraction control valves 140 to control the amount and/or pressure of the steam extracted at one or more of the steam extractions 98. The amount of steam extracted may also be controlled by control valves disposed on piping (not depicted) downstream of the steam extractions 98. Further, steam may discharge from the LP section 14B via an exhaust 142 on each end to the double flow section, to be condensed for reuse as boiler feedwater.

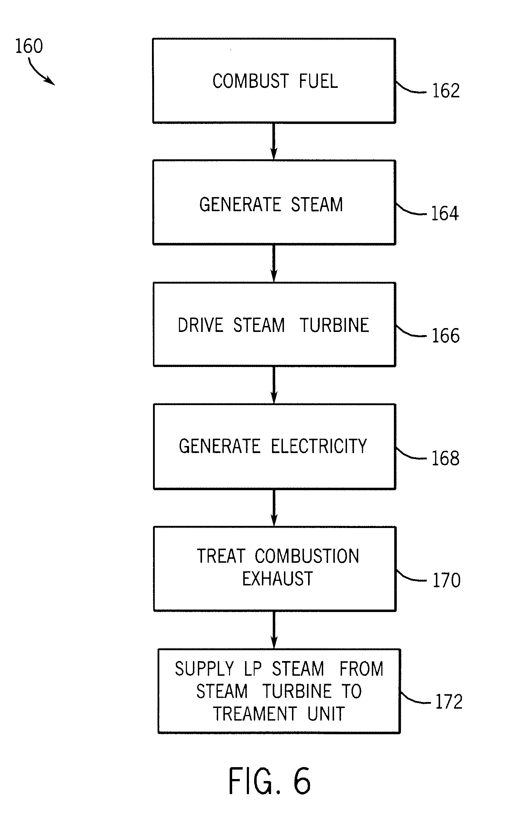

FIG. 6 depicts a method 160 of operating a power plant having a boiler, steam turbine, and one or more flue-gas treatment units (e.g., a CO2 separation unit). Fuel, such as coal (e.g., pulverized coal), waste products, biomass, and/or hydrocarbons, is combusted in the boiler to generate steam (blocks 162 and 164). The steam from the boiler is feed through a steam turbine to drive the steam turbine (block 166). Electricity is generated via the steam turbine such as by driving a generator via steam pressure and with the steam turbine shaft (block 168). Exhaust from the boiler, which may contain various compounds (e.g., CO2) to be removed prior to discharged to the environment, is feed through one or more flue-gas treatment units (e.g., a CO2 separation unit), where compounds (e.g., CO2) are altered or separated from the combustion exhaust (block 170). Steam from the low-pressure section of the steam turbine may be fed to one or more of the units (e.g., the CO2 unit) to facilitate separation of compounds (e.g., CO2) from the exhaust (block 172).

In summary, the present technique may be directed to an exemplary power plant having a boiler configured to combust fuel, vaporize liquid water into steam, and discharge a combustion exhaust (e.g., flue gas). The boiler provides steam to a steam turbine for generating electricity. The steam turbine may have two sections (e.g., IP section and LP section), three sections (e.g., HP section, IP section, and LP section), and so on. In certain embodiments, the steam turbine is configured to provide steam from the LP section to a flue-gas treatment unit, such as to a carbon dioxide separation unit. The LP steam may be supplied to a stripper reboiler in the separation unit, as discussed above, for example. A conduit may couple the LP section of the steam turbine with a stripper reboiler in a carbon dioxide separation unit.

Configuring the steam turbine to supply steam from a low pressure section of the steam turbine to a flue-gas treatment or processing unit may include installing a steam turbine at the power plant or retrofitting an existing steam turbine disposed at the power plant. Retrofit may involve replacing or modifying a low pressure section of the steam turbine. The low pressure section of the configured steam turbine comprises one or more steam extractions sized collectively to extract 10 % to 25 %, by weight, of the total steam entering the low pressure section. Other exemplary ranges, by weight, for steam extracted from the total steam through the LP section 14B include 5 % to 30 %, 12 % to 22 %, and 15 % to 20 %, and so on.

The one or more steam extractions may be uncontrolled or controlled extractions, or a combination thereof. The steam turbine may be configured such that the size of stages subsequent to a steam extraction is reduced correlative with an amount of steam to be extracted via the steam extraction.

In operation of the power plant, fuel (e.g., coal) is fed to the boiler and combusted in the boiler. A combustion exhaust is discharged from the boiler and processed in one or more treatment units. Liquid water is fed to the boiler and is vaporized into steam via heat generated by combusting the fuel. Steam is supplied from the boiler to a steam turbine. The steam may be supplied to a IP section or HP section of the steam turbine, for example. Steam is then supplied from a LP section of the steam turbine to one or more treatment units of the combustion exhaust. In one example, processing of the combustion exhaust includes recovering carbon dioxide from the combustion exhaust in the treatment unit.

While only certain features of the invention have been illustrated and described herein, many modifications and changes will occur to those skilled in the art. It is, therefore, to be understood that the appended claims are intended to cover all such modifications and changes as fall within the true spirit of the invention.

Aspects of the present invention are defined in the following numbered clauses:
1. A power plant comprising:
   a boiler configured to combust fuel, vaporize liquid water into steam, and discharge a combustion exhaust;
   a treatment unit configured to process the combustion exhaust discharged from the boiler;
   a steam turbine configured to receive steam from the boiler, wherein the steam turbine comprises a shaft, an intermediate pressure section, and a low pressure section, and wherein the steam turbine is configured to provide steam from the low pressure section to the treatment unit; and
   a load coupled to the shaft of the steam turbine and configured to be driven by the steam turbine.
2. The power plant of clause 1, wherein the treatment unit comprises a carbon dioxide separation unit.
3. The power plant of clause 2, wherein the carbon dioxide separation unit comprises a stripper and a reboiler associated with the stripper, wherein the reboiler is configured to receive steam from the low pressure section.
4. The power plant of clause 2 or clause 3, comprising a conduit coupling the low pressure section with a reboiler in the carbon dioxide separation unit.
5. The power plant of any one of the preceding clauses, wherein the steam turbine comprises a high pressure section.
6. A method of operating a power plant, comprising:
   feeding fuel to a boiler;
   combusting the fuel in the boiler;
   discharging a combustion exhaust from the boiler;
   processing the combustion exhaust in a treatment unit;
   feeding liquid water to the boiler;
   vaporizing the liquid water into steam via heat generated by combusting the fuel;
   supplying steam from the boiler to a steam turbine; and
   supplying steam from a low pressure section of the steam turbine to the treatment unit.
7. The method of clause 6, wherein processing comprises recovering carbon dioxide from the combustion exhaust in the treatment unit.
8. The method of clause 6 or clause 7, wherein supplying steam to the treatment unit comprises supplying steam from the low pressure section to a stripper reboiler in the treatment unit.
9. The method of any one of clauses 6 to 8, wherein feeding and combusting fuel comprises feeding coal to the boiler and combusting the coal in the boiler.
10. The method of any one of clauses 6 to 9, comprising producing electricity via a generator coupled to a shaft of the steam turbine.
11. A method comprising configuring a steam turbine in a power plant to supply steam from a low pressure section of the steam turbine to a flue-gas processing unit, wherein configuring the steam turbine comprises installing a steam turbine at the power plant or retrofitting an existing steam turbine disposed at the power plant.
12. The method of clause 11, wherein retrofitting comprises replacing or modifying a low pressure section of the steam turbine.
13. The method of clause 11 or clause 12, wherein a low pressure section of the configured steam turbine comprises one or more steam extractions sized collectively to extract 10 % to 25 %, by weight, of an amount of steam entering the low pressure section.
14. The method of any one of clauses 11 to 13, wherein configuring the steam turbine comprises reducing stage size subsequent to the steam extraction correlative with an amount of steam to be extracted via the steam extraction.
15. The method of any one of clauses 11 to 14, wherein the flue-gas processing unit comprises a carbon dioxide separation unit.
16. The method of clause 15, comprising configuring a stripper reboiler in the carbon dioxide separation unit to receive steam from the low pressure section.
17. A steam turbine comprising:
   a shaft;
   a high pressure section;
   an intermediate pressure section;
   a low pressure section configured with a steam extraction to provide steam to a flue-gas processing unit.
18. The steam turbine of clause 17, wherein the flue-gas processing unit comprises a carbon dioxide separation unit, and the steam extraction comprises a plurality of steam extractions sized collectively to provide at least an amount of steam required for operation of a stripper reboiler in the carbon dioxide separation unit.
19. The steam turbine of clause 17 or clause 18, wherein at least one stage in the low pressure section downstream of the steam extraction is reduced in size correlative to an amount of steam extracted via the steam extraction.
20. The steam turbine of any one of clauses 17 to 19, wherein the steam extraction comprises a plurality of steam extractions sized collectively to extract 10 % to 25 %, by weight, of an amount of steam entering the low pressure section.

## Claims

1. A power plant (10) comprising:
a boiler (20) configured to combust fuel (22), vaporize liquid water (24) into steam (25), and discharge a combustion exhaust (26);
a treatment unit (18, 19) configured to process the combustion exhaust (26) discharged from the boiler (20);
a steam turbine (16) configured to receive steam (25) from the boiler (20), wherein the steam turbine (16) comprises a shaft (38), an intermediate pressure section (36), and a low pressure section (14), and wherein the steam turbine (16) is configured to provide steam (12) from the low pressure section (14) to the treatment unit (18, 19); and
a load (40) coupled to the shaft (38) of the steam turbine (16) and configured to be driven by the steam turbine (16).

2. The power plant (10) of claim 1, wherein the treatment unit (18, 19) comprises a carbon dioxide separation unit (18).

3. The power plant (10) of claim 2, wherein the carbon dioxide separation unit (18) comprises a stripper and a reboiler associated with the stripper, wherein the reboiler is configured to receive steam (12) from the low pressure section (14).

4. The power plant (10) of claim 2 or claim 3, comprising a conduit coupling the low pressure section (14) with a reboiler in the carbon dioxide separation unit (18).

5. The power plant (10) of any one of the preceding claims, wherein the steam turbine (16) comprises a high pressure section (34).

6. A method of operating a power plant (10), comprising:
feeding fuel (22) to a boiler (20);
combusting the fuel (22) in the boiler (20);
discharging a combustion exhaust (26) from the boiler (20);
processing the combustion exhaust (26) in a treatment unit (18, 19);
feeding liquid water (24) to the boiler (20);
vaporizing the liquid water (24) into steam (26) via heat generated by combusting the fuel (22);
supplying steam (26) from the boiler (20) to a steam turbine (16); and
supplying steam (12) from a low pressure section (14) of the steam turbine (16) to the treatment unit (18, 19).

7. The method of claim 6, wherein processing comprises recovering carbon dioxide (18) from the combustion exhaust (26) in the treatment unit (18, 19).

8. The method of claim 6 or claim 7, wherein supplying steam (12) to the treatment unit (18, 19) comprises supplying steam from the low pressure section (14) to a stripper reboiler in the treatment unit (18, 19).

9. The method of any one of claims 6 to 8, wherein feeding and combusting fuel (22) comprises feeding coal to the boiler (20) and combusting the coal in the boiler (20).

10. The method of any one of claims 6 to 9, comprising producing electricity via a generator (40) coupled to a shaft (38) of the steam turbine (16).

11. A method comprising configuring a steam turbine in a power plant to supply steam from a low pressure section of the steam turbine to a flue-gas processing unit, wherein configuring the steam turbine comprises installing a steam turbine at the power plant or retrofitting an existing steam turbine disposed at the power plant.

12. The method of claim 11, wherein retrofitting comprises replacing or modifying a low pressure section of the steam turbine.

13. The method of claim 11 or claim 12, wherein a low pressure section of the configured steam turbine comprises one or more steam extractions sized collectively to extract 10 % to 25 %, by weight, of an amount of steam entering the low pressure section.

14. A steam turbine comprising:
a shaft;
a high pressure section;
an intermediate pressure section;
a low pressure section configured with a steam extraction to provide steam to a flue-gas processing unit.

15. The steam turbine of claim 14, wherein the flue-gas processing unit comprises a carbon dioxide separation unit, and the steam extraction comprises a plurality of steam extractions sized collectively to provide at least an amount of steam required for operation of a stripper reboiler in the carbon dioxide separation unit.
